# EUROPÄISCHE PATENTSCHRIFT

(11) **EP 2 839 766 B1**
(45) Veröffentlichungstag und Bekanntmachung des Hinweises auf die Patenterteilung: **12.04.2017**
(21) Anmeldenummer: 14179667.2
(22) Anmeldetag: 04.08.2014
(51) Int. Cl.: A47J 31/44

(54) **Getränkezubereitungseinrichtung mit einer Funktionstaste**
Beverage preparation device having a function key
Dispositif de préparation de boissons doté d'une touche de commande

(30) Priorität: 13.08.2013 DE 102013216042
(43) Veröffentlichungstag der Anmeldung: 25.02.2015
(73) Patentinhaber: BSH Hausgeräte GmbH, 81739 München (DE)
(72) Erfinder: Brezovnik, Peter, 3330 Mozirje (SI); Golcman, Damjan, 3327 Smartno ob Paki (SI); Habe, Mitja, 3320 Velenje (SI); Mejac, Matej, 3272 Rimske Toplice (SI); Ogrizek, Bostjan, 3320 Velenje (SI); Pavlovic, Henrik, 3333 Ljubno ob Savinji, Slowenien (SI); Pocivavsek, Tadej, 300 Celje (SI)

(56) Entgegenhaltungen:
- EP-A2- 0 226 437
- EP-A2- 0 779 485
- EP-A2- 2 447 206
- WO-A2-2008/006556
- WO-A2-2012/143366
- JP-A- 2004 291 973
- US-A1- 2009 090 246

## Beschreibung

Die Erfindung betrifft eine Heißgetränkezubereitungseinrichtung insbesondere für Haushaltszwecke mit einer einem Bediener zugewandten Frontseite, mit einer an der Frontseite angeordneten Aufstellfläche für ein Getränkegefäß mit einer darüber angeordneten Ausgabeeinrichtung zur Abgabe einer Tassenportion eines Heißgetränks in ein auf der Abstellfläche positioniertes Getränkegefäß und mit einer an der Frontseite in einer Achse zwischen der Ausgabeeinrichtung und über der Aufstellfläche angeordneten großflächigen und gelenkig gelagerten Taste zur Inbetriebnahme der Heißgetränkezubereitungseinrichtung. Die Taste umfasst eine großflächige, dem Benutzer zugewandte Tastenfläche bzw. einen großen Bedienungsabschnitt. Der großflächige Bedienungsabschnitt der Taste kann in etwa der Ansichtsfläche eines kleineren Getränkegefäßes entsprechen und dient der einfachen Betätigung der Taste durch ein solches Getränkegefäß selbst durch dessen Abstellen oder durch das bequeme manuelle Betätigen der Taste nach Abstellen des Getränkegefäßes auf der Aufstellfläche. Die Betätigungsrichtung verläuft dazu weitgehend waagrecht bezüglich einer Aufstellfläche der Zubereitungseinrichtung bzw. weitgehend senkrecht bezüglich der regelmäßig vertikal ausgerichteten Tastenfläche. Die Taste kann durch ein bestimmungsgemäß unter der Abgabeeinrichtung abgestelltes Trinkgefäß weitgehend verdeckt werden, nimmt also einen wesentlichen Abschnitt der Frontseite ein. Damit erspart die Taste allerdings Platz auf der nicht verdeckten, insofern freien Frontseite, womit die Zubereitungseinrichtung kompakter konstruiert und schlichter gestaltet werden kann. Die Taste kann außerdem zumindest einseitig über die durch das Getränkegefäß verdeckte Fläche der Frontseite überstehen, also bei abgestelltem Getränkegefäß rechts-, links-, ober- oder unterseitig frei liegen, um dort manuell betätigt werden zu können. Eine entsprechende Heißgetränkezubereitungseinrichtung offenbart die nachveröffentlichte Anmeldung DE 10 2012 200 322 des Anmelders. Des Weiteren ist aus US 2009/090246 A1 ein als Kaffeemaschine ausgeführter Getränkebereiter mit einer dem Bediener zugewandten Frontseite die den Ausgabebereich zum Gerät hin abgrenzt, mit einer an der Frontseite angeordneten Aufstellfläche für ein Getränkegefäß mit einer darüber angeordneten Filterbereich als Ausgabeeinrichtung zur Abgabe eines Heißgetränks in ein auf der Aufstellfläche positioniertes Getränkegefäß bekannt. Darüber hinaus ist dieser Getränkebereiter dazu eingerichtet, das Getränkegefäß mittels einer mechanischen federvorgespannten Blockiereinrichtung im Ausgabebereich gegen herausfallen zu fixieren.

Aufgabe der Erfindung ist es, eine derartige Heißgetränkezubereitungseinrichtung hinsichtlich der Zuverlässigkeit und Bequemlichkeit ihrer Bedienung und Aktivierung zu verbessern.

Diese Aufgabe wird bei einer Heißgetränkezubereitungseinrichtung der oben genannten Art durch eine randseitig angeordnete Schwenkachse der Taste gelöst. Erfindungsgemäß liegt also die Schwenkachse bei einer senkrechten Projektion in Betätigungsrichtung der Taste nicht in einer geometrischen oder optischen Mitte der Frontseite der Einrichtung oder der Tastenfläche oder lediglich seitlich versetzt zur Mitte, sondern an einem rechten, linken, oberen oder unteren Rand der Taste. Sie weist dort einen Abstand von wenigen Millimetern bis zu einem Zentimeter vom Rand in Richtung der Tastenmitte auf. Alternativ kann die Schwenkachse in einer senkrechten Projektion auf die Taste bzw. in ihrer Betätigungsrichtung betrachtet sogar außerhalb der Tastenfläche liegen. Damit kann verhindert werden, dass ein Benutzer ein Getränkegefäß zufällig genau zentral bzw. genau in einer senkrechten Mittelachse der Frontseite oder leicht versetzt auf der Aufstellfläche absetzt und zugleich die Taste bedienen will. Trifft er dabei auf die Schwenkachse der Taste, kann sie nicht betätigt werden. Dies ist für den Benutzer nicht zufrieden stellend und er könnte eine Fehlfunktion der Getränkeeinrichtung vermuten. Erfindungsgemäß jedoch liegt die Achse außerhalb einer Betätigungsfläche, also außerhalb eines Abschnitts der Tastenfläche, die beim Abstellen der Tasse auf der Aufstellfläche verdeckt wird, so dass der Benutzer die Taste durch Drücken mit dem Getränkegefäß zuverlässig aktivieren kann.

Die weitgehend mittige oder seitlich zur Mitte versetzte Anordnung der Schwenkachse im Stand der Technik führte zu einer Art Wippmechanismus der Taste. Damit war eine Betätigung sowohl linksseitig als auch rechtsseitig der Schwenkachse möglich. Beide Betätigungen waren in denselben Betätigungsimpuls oder in dasselbe Betätigungssignal für die Zubereitungseinrichtung umzusetzen. Mit einer erfindungsgemäßen Anordnung der Schwenkachse in einem Randbereich der Taste ergibt sich dagegen nur noch eine einzige Betätigungsmöglichkeit und Betätigungsrichtung der Taste. Eine mechanisch oder elektrisch aufwändige Umsetzung zweier unterschiedlicher Betätigungen kann dadurch entfallen. Damit vereinfacht sich der Aufbau der Zubereitungseinrichtung.

Derjenige Abschnitt der Taste, der nicht für eine Betätigung mit einem Getränkegefäß, sondern für eine manuelle Bedienung vorgesehen oder ausgebildet ist, kann vorteilhafterweise an einem der Schwenkachse gegenüberliegenden Rand der Taste angebracht sein, damit ein Benutzer auch bei einer manuellen Betätigung nicht zu einem Druck auf die Schwenkachse verleitet wird. Ausgehend von einem Rechtshänder als Benutzer der Zubereitungseinrichtung kann der manuell zu bedienende Tastenabschnitt ebenfalls an einem rechten Rand der Taste liegen, die Schwenkachse ist dann vorteilhafterweise auf der linken Seite angeordnet. Selbstverständlich können die Schwenkachse und der manuell zu betätigende Abschnitt der Taste auch umgekehrt oder an einem oberen oder unteren Rand der Taste angeordnet sein.

Aus optischen Gründen kann die Aufstellfläche für das Getränkegefäß in das Gehäuse der Getränkeeinrichtung an der Frontseite eingezogen und die Frontseite ggf. zusätzlich geneigt sein. Die Heißgetränkezubereitungseinrichtung kann beispielsweise über eine sich konisch nach unten hin verjüngende Einbuchtung in der Frontseite zwischen der Ausgabeeinrichtung und der Aufstellfläche bzw. unter der Ausgabeeinrichtung und über der Aufstellfläche verfügen, so dass die Ausgabeeinrichtung optisch weniger stark aus dem übrigen Gehäuse auskragen muss. Alternativ kann sich die Einbuchtung der Frontseite nach unten hin verbreitern und dafür weniger eintiefen. Nach einer vorteilhaften Ausgestaltung der Erfindung kann die Schwenkachse entsprechend der konischen Einbuchtung geneigt verlaufen. Damit kann eine möglichst große Tastenfläche erzielt werden, die für ihre Betätigung zur Verfügung steht, wenn die Schwenkachse in der Betätigungsrichtung betrachtet in der Tastenfläche liegt.

Die Tastenfläche der Taste kann also zur Betätigung unmittelbar mit dem Gefäß berührt bzw. gedrückt werden oder alternativ in herkömmlicher Weise bei einer manuelle Betätigung mit zumindest einem Finger eines Benutzers. Nach einer vorteilhaften Ausgestaltung der Erfindung kann die Zubereitungseinrichtung einen ersten Betätigungsabschnitt der Taste für eine Betätigung mit einem Getränkegefäß und einem räumlich vom ersten Betätigungsabschnitt getrennten zweiten Betätigungsabschnitt der Taste für eine Betätigung mit zumindest einem Finger umfassen, wobei der erste Betätigungsabschnitt in einer vertikalen Betätigungsebene und weitgehend in der Front der Zubereitungseinrichtung liegt und der zweite Betätigungsabschnitt in einer zweiten, von der ersten Betätigungsebene verschiedenen zweiten Betätigungsebene. Die beiden Betätigungsabschnitte liegen also in unterschiedlichen Betätigungsebenen, die entweder parallel zueinander verlaufen können oder auch in einem Winkel zueinander stehen und sich daher schneiden können. Jedenfalls aber fallen die beiden Betätigungsebenen des ersten Betätigungsabschnitts und des zweiten Betätigungsabschnitts nicht zusammen. Vorzugsweise liegt die erste Betätigungsebene in einer Betätigungsrichtung betrachtet hinter der zweiten Betätigungsebene. Derjenige Betätigungsabschnitt, der manuell bedient werden kann, kann also vorzugsweise dem Benutzer näher liegen. Diese räumlich getrennte Anordnung der beiden Betätigungsabschnitte bietet den Vorteil, dass der Betätigungsweg zur Bedienung des zweiten, der manuellen Betätigung zugeordneten Betätigungsabschnitts, kürzer ist, als wenn er in der selben Betätigungsebene läge wie der erste Betätigungsabschnitt. Jener ist unverändert bequem zu bedienen, da der Benutzer der Zubereitungseinrichtung bei der Bedienung des ersten Betätigungsabschnitts ein Getränkegefäß quasi als Verlängerung seiner Hand nutzen kann. Mit der erfindungsgemäßen Anordnung des zweiten Betätigungsabschnitts braucht die Bedienungshand des Benutzers nur noch einen kürzeren Weg zur Bedienung des zweiten Betätigungsabschnitts zurückzulegen. Dadurch erleichtert sich die Bedienung der Zubreitungseinrichtung. Vorteilhafterweise kann der zweite Betätigungsabschnitt in einem Gehäusebereich bzw. Frontbereich der Zubreitungseinrichtung liegen, der ohnehin bezüglich der ersten Betätigungsebene auf den Benutzer hin gerichtet ist. Dies kann beispielsweise eine Umrahmung einer Einbuchtung zwischen der Ausgabeeinrichtung und der Aufstellfläche zur Aufnahme eines Getränkegefäßes sein. Dadurch lässt sich eine besonders ansprechende, beispielsweise schlichte oder übersichtliche Gestaltung der Frontseite der Zubereitungseinrichtung erreichen.

Die gelenkige bzw. schwenkbare Lagerung der Taste auf ihrer Schwenkachse umfasst regelmäßig zwei Angeleinrichtungen bzw. Angeln, um der Taste zwei einander entgegengesetzte definierte Schwenkrichtungen zu verleihen. Nach einer weiteren vorteilhaften Ausgestaltung der Erfindung verfügt die Taste über mindestens drei Angeln. Dadurch lässt sich nicht nur eine stabile und robuste Lagerung, sondern auch eine Verschwenkung der Taste mit weniger Lagerspiel erzielen. Da die Taste ein viel betätigtes Bedienelement ist, das ggf. auch einer unsanften Behandlung ausgesetzt sein kann, bietet zumindest eine dritte Angel auch eine erhöhte Ausfallsicherheit, falls eine der Angeln infolge einer Überbelastung ausfallen sollte. Dadurch kann die Zuverlässigkeit der Heißgetränkezubereitungseinrichtung erhöht werden.

Eine Angel stellt einen gelenk- bzw. scharnierartigen Abschnitt dar, der einen gehäusefesten Abschnitt und einen um die Schwenkachse der Angel schwenkbaren Abschnitt umfasst, der der Taste zugeordnet ist. Nach einer weiteren vorteilhaften Ausgestaltung der Erfindung kann der schwenkbare Abschnitt lösbar am gehäusefesten Abschnitt gelagert sein. Damit kann die Angel eine einfache Montage und eine einfache Demontage ermöglichen. Dir Taste lässt sich dadurch mit geringem Aufwand sowohl montieren als auch im Bedarfsfall reparieren.

Nach einer weiteren vorteilhaften Ausgestaltung der Erfindung kann die Angel einen Federhaken und ein bezüglich der Schwenkachse der Angel weitgehend gegenüberliegendes Gegenlager an einem ersten Abschnitt umfassen, die einen Angelbolzen, der die Schwenkachse definiert und der an einem zweiten Abschnitt angeordnet ist, gemeinsam lösbar umgreifen, wobei der erste Abschnitt den gehäusefesten und der zweite Abschnitt den schwenkbaren Abschnitt bilden kann oder umgekehrt. Der Federhaken und das mit ihm zusammenwirkende gegenüberliegende Gegenlager stellen die lösbare Lagerung des ersten Abschnitts dar. Die federnde Lagerung des Federhakens ermöglicht ein Verschnappen des einen Abschnitts am anderen. Jedenfalls der Federhaken kann federnd gelagert sein, während das gegenüberliegende Gegenlager starr sein kann. Ist auch das Gegenlager federnd gelagert, so können beide, der Federhaken und das Gegenlager, weniger elastisch ausgebildet sein, um gemeinsam ein Verschnappen zu ermöglichen. Damit können sich die Anforderungen an das Material des Federhakens und des Gegenlagers reduzieren, was einer kostengünstigeren Herstellung zugute kommen kann. Im entspannten Zustand zumindest des Federhakens umgreifen sie die Schwenkachse lösbar, so dass sie sich werkzeuglos montieren und ggf. demontieren lassen. Sie ermöglichen folglich eine einfache Montage und Reparatur der gelenkig gelagerten bzw. wippend gelagerten Achse.

Nach einer weiteren vorteilhaften Ausgestaltung der Erfindung kann die Angel einen Betätigungsabschnitt am Federhaken zum Auslenken des Federhakens weg vom Gegenlager umfassen. Der Betätigungsabschnitt stellt eine Demontagehilfe dar, die vorzugsweise werkzeuglos bedient werden kann. Die Anordnung des Betätigungsabschnitts am Federhaken stellt damit eine Funktionenzusammenfassung aus dem Federhaken einerseits und seiner Demontagehilfe zum Ausklinken des Federhakens in einer Demontagerichtung andererseits dar.

Nach einer weiteren vorteilhaften Ausgestaltung der Erfindung kann der Betätigungsabschnitt einen Rastvorsprung umfassen, der in einem aktivierten Zustand des Federhakens in einer Demontagerichtung des beweglichen Abschnitts hinter einem Widerlager liegt, von dem er bei Auslenkung des Federhakens freikommt. Der Federhaken lässt sich durch eine Bedienung des Betätigungsabschnitts auslenken. Im ausgelenkten Zustand liegt der Rastvorsprung also abseits eines Widerlagers, hinter das er im nicht ausgelenkten und damit aktivierten Zustand des Federhakens eingreift. Beim Verschnappen des Federhakens bzw. bei seinem Einrasten bei der Montage wird also zugleich der Rastvorsprung als Sicherung gegen ein ungewolltes Deaktivieren des Federhakens aktiviert. Damit kann ein ungewolltes Ausklinken der Taste verhindert werden. Vor allem ist eine Demontage der Taste von einer Außenseite des Gehäuses, insbesondere von einer Betätigungsseite der Taste aus, nicht möglich. Eine Demontage der Taste erfordert also immer ein Öffnen des Gehäuses, das für einen Bediener im Allgemeinen nicht möglich oder zumindest erschwert ist. Damit kann die Funktionssicherheit der Zubereitungseinrichtung weiter gesteigert werden.

Das Prinzip der Erfindung wird im Folgenden anhand einer Zeichnung beispielshalber noch näher erläutert. In der Zeichnung zeigen:
- Figur 1:: eine Detailansicht einer erfindungsgemäßen Heißgetränkezubereitungseinrichtung von ihrer Frontseite aus,
- Figur 2:: eine Rückseitenansicht der Schale,
- Figur 3:: eine Detailansicht der gelenkigen Lagerung der Bedienungstaste,
- Figur 4:: eine Detailansicht der Angeln der Taste,
- Figur 5:: eine schematische Darstellung eines Demontagevorgangs der Taste.

Die erfindungsgemäße Heißgetränkezubereitungseinrichtung weist an ihrer Frontseite 1 eine Schale 9 als Kunststoffformteil auf, an dem eine weitgehend waagrechte und parallel zu einer Aufstellfläche der Zubereitungseinrichtung orientierte Aufstellfläche 2 angeordnet ist, auf der ein großes Getränkegefäß, beispielsweise ein Latte-Macchiato-Glas, während eines Zubereitungsvorgangs abgestellt werden kann. Die Aufstellfläche 2 ragt in eine Einbuchtung 4 hinein, die sich von der Aufstellfläche 2 aufwärts bis unter eine Ausgabeeinrichtung 3 für Heißgetränke erstreckt. Zwischen der Aufstellfläche 2 und der Ausgabeeinrichtung 3 erstreckt sich eine leicht konkav gewölbte Frontfläche 5 der Einbuchtung 4, deren Wölbung sich in die Tiefe der Zubereitungseinrichtung hinein erstreckt und damit Raum schafft für die in aller Regel zylindrischen Getränkegefäße. Die Einbuchtung 4 ist links- und rechtseitig begrenzt von Rahmenabschnitten 6, die an ihrem unteren Ende mit einer Ausrundung in die Aufstellfläche 2 übergehen, so dass sie, die Aufstellfläche 2 und die oberseitige Ausgabeeinrichtung 3 zusammen die Einbuchtung 4 und deren Frontfläche 5 umrahmen. Die Rahmenabschnitte 6 verlaufen sowohl gegenüber der Aufstellfläche 2 als auch gegenüber der Frontfläche 5 leicht geneigt, und zwar von der Aufstellfläche 2 nach oben hin zur Ausgabeeinrichtung 3 nach hinten geneigt und von außen nach innen auf die Frontfläche 5 zu konvergierend. Da die Frontfläche 5 dagegen weitgehend vertikal verläuft und damit senkrecht auf die Aufstellfläche 2 steht, verjüngt sie sich zur Aufstellfläche 2 hin konisch. Ihre vertikalen Ränder 7, 8, an denen sie in die Rahmenabschnitte 6 übergeht, verlaufen also zur Aufstellfläche 2 hin, in einer bezüglich der Frontfläche 5 orthogonalen Betrachtungsrichtung gesehen, aufeinander zu. In einer demgegenüber orthogonalen Seitenansicht der Zubereitungseinrichtung dagegen verlaufen sie genauso wie die Frontfläche 5 lotrecht zur Aufstellfläche 2 bzw. vertikal.

Einen großen Teil der Frontfläche 5, nämlich etwa 50% ihrer Fläche, nimmt eine Taste 10 ein. Sie dient einer Betätigung der Zubereitungseinrichtung und insbesondere als Start/Stopp-Taste. Sie ist von der Frontseite 1 der Zubereitungseinrichtung durch eine orthogonal auf die Frontfläche 5 bzw. die Taste 10 stehende Betätigungskraft in Richtung des Pfeils B bedienbar. Aufgrund der Größe ihrer Erstreckung in der Frontfläche 5 lässt sich die Taste 10 bestimmungsgemäß entweder durch Drücken mit einem Getränkebehälter während seines Abstellens auf der Abstellfläche 2 in einer Einführrichtung in Richtung des Pfeils B in die Einbuchtung 4 betätigen oder unmittelbar durch eine manuelle Betätigung mit mindestens einem Finger.

Die Taste 10 ist an der Zubereitungseinrichtung bzw. an der Schale 9 gelenkig und federvorgespannt gelagert, so dass sie in der Betätigungsrichtung B gegen die Federkraft ausgelenkt und dadurch betätigt werden kann. Die bei der Betätigung belastete Feder entspannt sich bei Wegfall der Betätigungskraft und drückt die Taste 10 in eine Gegenrichtung zur Betätigungskraft B horizontal nach außen und damit dem Benutzer entgegen. Erfindungsgemäß ist die Gelenkachse 12, 13 der Taste 10 nicht mehr in einem mittleren Bereich der Taste 10 bzw. der Frontseite 1 der Zubreitungseinrichtung angeordnet, sondern an einem linken Rand 11 der Taste 10. In einer ersten Ausführungsform ist die Gelenkachse 12 in jeder Hinsicht orthogonal auf die Aufstellfläche 2 gerichtet, so dass sie dem ihr gegenüber schräg verlaufenden Rand 11 einen minimalen Abstand von 7 mm und einen maximalen Abstand von etwa 10 mm einnimmt. In einer zweiten Ausführungsform ist die Gelenkachse 13 geneigt ausgeführt, so dass sie parallel zum linken Rand 11 bzw. zur Kante 7 verläuft. Sie hat einen Abstand von etwa 5 mm gegenüber dem linken Rand 11. In beiden Fällen jedenfalls sorgt die Anordnung der Gelenkachse 12, 13 dafür, dass die Tastenfläche der Taste 10 rechts von der Gelenkachse 12, 13 maximal bzw. links von ihr minimal ist. Damit ist weitgehend ausgeschlossen, dass ein Benutzer beim Versuch, die Zubereitungseinrichtung bzw. die Taste 10 zu betätigen, zufällig genau auf die Achse 12, 13 drückt und damit keine Betätigung auslöst.

Die Taste 10 erstreckt sich im Wesentlichen in der gleichen Ebene wie die Frontfläche 5 der Schale 9. Sie steht geringfügig von der Frontfläche 5 vor, ist also nicht bündig in die Frontfläche 5 eingelassen, wenn sie entspannt und nicht betätigt ist. Im Betätigungszustand, bzw. wenn sie eingedrückt ist, liegt sie dagegen weitgehend in der Ebene der Frontfläche 5. Die Taste 10 ist genauso wie die Frontfläche 5 um eine vertikale bzw. orthogonal zur Aufstellfläche 2 stehende Achse gekrümmt. Der konkav gekrümmte Teil der Taste 10 stellt einen ersten Betätigungsabschnitt 14 der Taste 10 dar. Die Taste 10 geht an ihrem rechten Rand in den rechten Rahmenabschnitt 6 über und stellt einen Teil dessen dar. Dieser Abschnitt der Taste 10, der sich aus der Frontfläche 5 erhebt, stellt einen zweiten Betätigungsabschnitt 15 der Taste 10 dar. Die Taste 10 hat damit eine dreidimensionale Struktur bzw. Oberflächengestaltung, bei der der erste Betätigungsabschnitt 14 in Richtung der Betätigungsrichtung B gesehen hinter dem vorspringenden zweiten Betätigungsabschnitt 15 liegt. Jener hat den Zweck, eine unmittelbare Betätigung der Taste 10 mit einem Finger zu erleichtern, weil der Betätigungsabschnitt 15 dem Benutzer näher liegt, er also zur Betätigung der Taste 10 nicht am Getränkegefäß vorbei greifen muss, sondern die Taste 10 neben dem Getränkegefäß bedienen kann. Damit gestaltet sich die Bedienung der Zubreitungseinrichtung einfacher und bequemer.

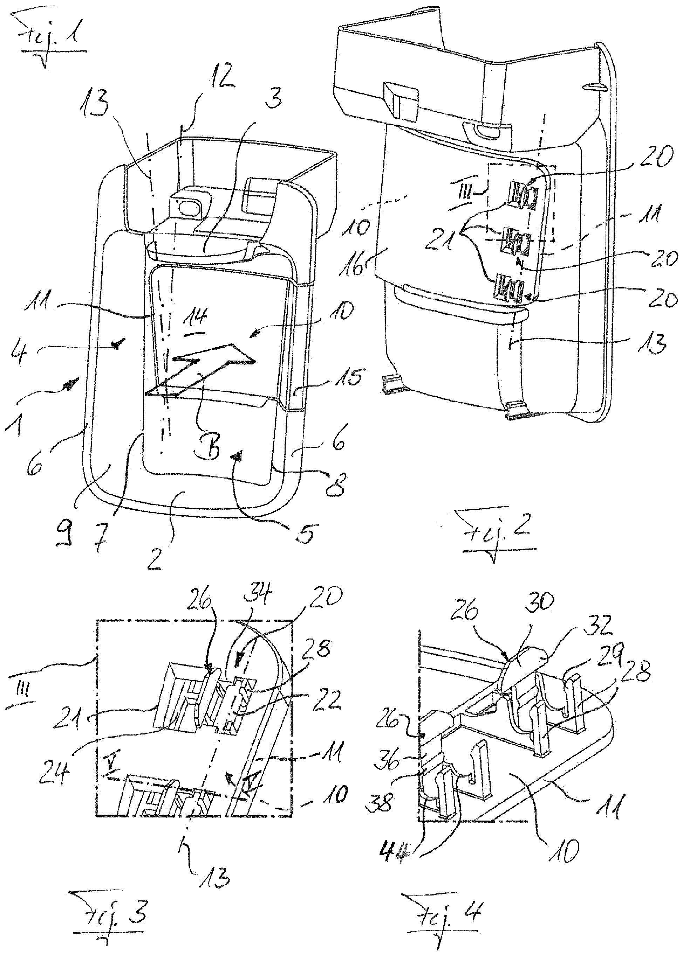

Figur 2 bietet eine Rückseitenansicht der Schale 9. In einer Ausbuchtung 16 ist die nicht erkennbare Taste 10 untergebracht. Sie ist an der Schale 9 mit drei Angeln 20 gelenkig gelagert, die in Angelfenstern 21 in der Ausbuchtung 16 angeordnet sind und die geneigte Gelenkachse 13 definieren.

Figuren 3 und 4 zeigen Details der gelenkigen Lagerung der Taste 10 als schwenkbarem Abschnitt 24: Die Figur 3 bietet eine Ausschnittsansicht III gemäß Figur 2 auf die Rückseite der Schale 9, die Figur 4 zeigt einen Abschnitt der Taste 10 im Bereich des in den Figuren 2 und 3 verdeckten linken Rands 11 der Taste 10. Am linken Rand 11 trägt die Taste 10 rückseitig insgesamt drei Angeln 20, von denen nur eine vollständig gezeigt ist. Die Angeln 20 bestehen tastenseitig jeweils aus einem horizontal abstehenden Federhaken 26 und zwei mit ihnen zusammenwirkenden, ebenfalls horizontal abstehenden stiftförmigen Gegenlagern 28, die durch ein rechteckiges Angelfenster 21 in der Schale 9 und um einen geräteseitigen zylindrische Angelbolzen 22 herum greifen. Der Angelbolzen 22 verläuft weitgehend vertikal und bildet die Gelenkachse 13 der Taste 10. Der Federhaken 26 und die Gegenlager 28 umgreifen ihn und können auf seiner Mantelfläche gleiten, so dass die Angel 20 ein Scharniergelenk für die Taste 10 gegenüber der Schale 9 bildet. Der Angelbolzen 22 unterteilt das Angelfenster 21 in Richtung der Gelenkachse 13 und weist an seinen Übergängen zur Schale 9 jeweils quaderförmige Widerlager 34 auf, hinter die der Federhaken 26 greift.

Figur 4 zeigt die tastenseitigen Bestandteile einer der drei Angeln 20 detaillierter: Jeder Federhaken 26 besteht aus einem balkenförmigen Schaft 36, der senkrecht von der Taste 10 nach innen in das Gehäuse hinein absteht. Der Schaft 36 läuft aus und endet im Betätigungsabschnitt 30, an dem der Federhaken 26 ausgelenkt werden kann. Etwa auf zwei Dritteln des Schafts 36 verläuft auf seiner den Gegenlagern 38 zugewandten Seite eine waagrechte Rippe 38. Sie liegt etwa in der gleichen Höhe wie Nasen 29, die ebenfalls senkrecht von den Gegenlagern 38 abstehen. Im montierten Zustand umgreifen der Federhaken 26 und die Gegenlager 38 den Angelbolzen 22 mit der Rippe 38 und den Nasen 29. Zwischen dem Federhaken 26 und den Gegenlagern 28 liegen zwei konkave Lagerpfannen 42 mit einem Ausrundungsradius entsprechend dem Außenradius des Angelbolzens 22, die dessen Rotation gegenüber der Taste 10 definieren.

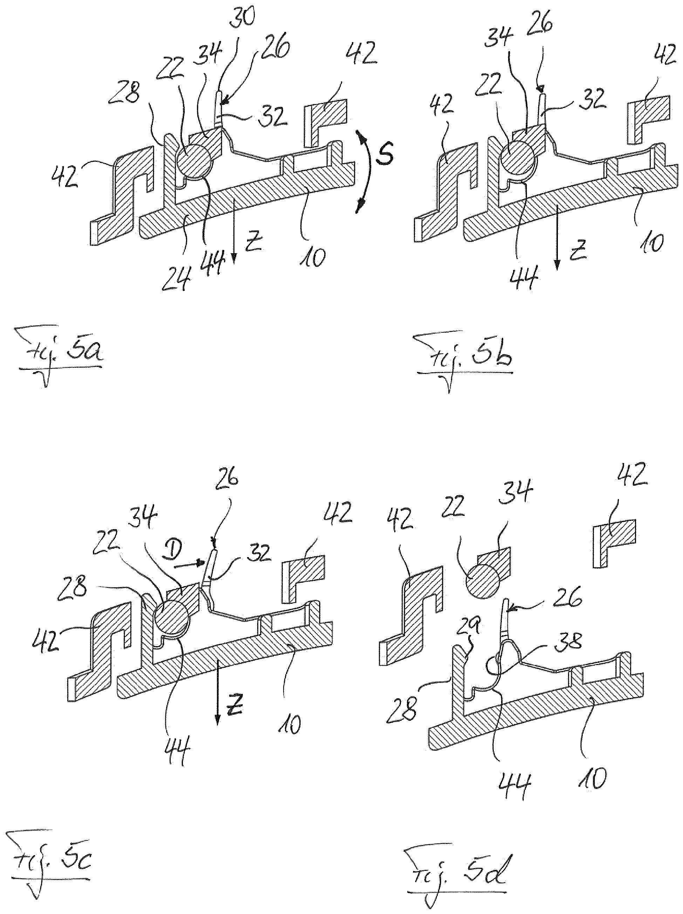

In Figur 5 ist ein Ausklinken bzw. Demontieren der Taste 10 anhand einer Schnittansicht entlang der Schnittlinie V - V in Figur 3 stark schematisiert dargestellt. Die Schnittlinie V - V verläuft durch den oberen Teil des Angelfensters 21, dessen Rahmenteile 42 es begrenzen. In Ansichtsrichtung teilt der zylindrische Angelbolzen 22 das Angelfenster 21. An seinem rahmenseitigen Ende ist das quaderförmige Widerlager 34 angebracht. Die bisher benannten Teile sind Bestandteile der Schale 9 und zählen damit zu den feststehenden Gehäuseteilen. Von der Taste 10 sind ein Gegenlager 28 und der Federhaken 26 zu erkennen. Der Schaft 36 des Federhakens 26 ist verdeckt, nur sein Betätigungsabschnitt 30 ragt über das Widerlager 34 hinaus. Der Federhaken 26 und das Gegenlager 28 umschließen den Angelbolzen 22 und bilden damit ein Scharnier oder Gelenk für die Taste 10 in einer Schwenkrichtung S.

In der in Figur 5a dargestellten Lage befindet sich die Taste 10 in einem unbelasteten Grundzustand, in dem sie durch eine Druckkraft betätigt werden kann und dadurch in Schwenkrichtung S ausgelenkt und durch eine nicht dargestellte Feder in ihre Ausgangslage zurückgeschwenkt wird.

Figur 5b zeigt die Wirkung einer Zugkraft Z senkrecht auf die Taste 10 entgegen ihrer Betätigungsrichtung. Sie wirkt, wenn ein Benutzer versucht, die Taste 10 von einer Außenseite der Zubreitungseinrichtung aus zu demontieren. Bei ausreichender Kraft Z können der Federhaken 26 und das Gegenlager 28 so weit gespreizt werden, dass sich der Angelbolzen 22 aus seiner Lagerpfanne 44 hebt. Der Angelbolzen 22 ist dann zwischen der Nase 29 und der Rippe 38 (beide nur in Figur 5d) eingeklemmt. Eine weitere Bewegung in Richtung der Kraft Z der Taste 10 verhindert jedoch der Rastvorsprung 32 am Betätigungsabschnitt 30, der jetzt am Widerlager 34 anliegt bzw. anschlägt. Damit ist eine weitere Demontage der Taste 10 in Richtung der Kraft Z unterbunden.

Eine gezielte Demontage der Taste 10 ist dagegen ausschließlich von einer Innenseite der Zubereitungseinrichtung aus möglich. Von dort ist der Betätigungsabschnitt 30 zugänglich, auf den eine Demontagekraft D aufgebracht werden kann. Sie kann den Federhaken 26 so weit auslenken, dass er vom Widerlager 34 freikommt (vergleiche Figur 5c). Zugleich mit dem Federhaken 26 wird auch die Rippe 38 so weit ausgelenkt, dass der Angelbolzen 22 nicht mehr zwischen der Nase 29 und der Rippe 38 festgehalten werden kann. Damit ist die Angel 20 ausgehängt, so dass die Taste 10 von der Schale 9 abgenommen werden kann.

In Gegenrichtung, also zur Montage der Taste 10, genügt es, sie in Gegenrichtung der Kraft Z mit dem Federhaken 26 und den Gegenlagern 28 voraus in das Angelfenster 21 einzuschieben, bis der Rastvorsprung 22 hinter das Widerlager 34 schnappt. Dann ist die Angel 20 betriebsbereit und die Taste 10 vollständig montiert (Figur 5d).

Da es sich bei dem vorhergehenden, detailliert beschriebenen Frontabschnitt einer Heißgetränkezubereitungseinrichtung um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Abmessungen und Ausgestaltungen der Taste in anderer Form als in der hier beschriebenen erfolgen. Ebenso können der erste und der zweite Betätigungsabschnitt in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Frontseite
- 2: Aufstellfläche
- 3: Ausgabeeinrichtung
- 4: Einbuchtung
- 5: Frontfläche
- 6: Rahmenabschnitt
- 7: vertikaler Rand
- 8: vertikaler Rand
- 9: Schale
- 10: Taste
- 11: linker Rand
- 12: Gelenkachse
- 13: Gelenkachse
- 14: erster Betätigungsabschnitt
- 15: zweiter Betätigungsabschnitt
- 20: Angel
- 21: Angelfenster
- 22: Angelbolzen
- 24: schwenkbarer Abschnitt
- 26: Federhaken
- 28: Gegenlager
- 29: Nase
- 30: Betätigungsabschnitt
- 32: Rastvorsprung
- 34: Widerlager
- 36: Schaft
- 38: Rippe
- 42: Rahmenteil
- 44: Lagerpfanne
- B: Betätigungsrichtung
- D: Demontagekraft
- S: Schwenkrichtung
- Z: Zugkraft

## Patentansprüche

1. Heißgetränkezubereitungseinrichtung für Haushaltszwecke mit einer einem Bediener zugewandten Frontseite (1), mit einer an der Frontseite (1) angeordneten Aufstellfläche (2) für ein Getränkegefäß mit einer darüber angeordneten Ausgabeeinrichtung (3) zur Abgabe eines Heißgetränks in ein auf der Aufstellfläche 2 positioniertes Getränkegefäß und mit einer an der Frontseite (1) zwischen der Ausgabeeinrichtung (2) und der Aufstellfläche (3) angeordneten großflächigen gelenkig gelagerten Taste (10) zur Inbetriebnahme, **gekennzeichnet durch** eine randseitig angeordnete Schwenkachse (12; 13) der Taste (10), die sich in einem Abstand zum Rand der Taste (10) von bis zu einem Zentimeter erstreckt oder die außerhalb der Tastenfläche liegt.

2. Zubereitungseinrichtung nach dem obigen Anspruch mit einer sich konisch nach unten hin verjüngende Einbuchtung der Frontseite (1) zwischen der Ausgabeeinrichtung (3) und der Aufstellfläche (2), **gekennzeichnet durch** eine entsprechend der konischen Einbuchtung geneigte Schwenkachse (13) der gelenkigen Lagerung der Taste (10).

3. Zubereitungseinrichtung nach einem der obigen Ansprüche, **gekennzeichnet durch** einen ersten Betätigungsabschnitt (14) der Taste (10) für eine Betätigung mit einem Getränkegefäß und **durch** einen räumlich vom ersten Betätigungsabschnitt (14) getrennten zweiten Betätigungsabschnitt (15) der Taste (10) für eine Betätigung mit zumindest einem Finger, wobei der erste Betätigungsabschnitt (14) in einer weitgehend vertikalen Betätigungsebene liegt und der zweite Betätigungsabschnitt (15) in einer zweiten, von der ersten Betätigungsebene verschiedenen zweiten Betätigungsebene.

4. Zubereitungseinrichtung nach einem der obigen Ansprüche, **gekennzeichnet durch** eine Lagerung der Taste (10) an mindestens drei Angeln (20).

5. Zubereitungseinrichtung nach dem Anspruch 2 oder 3 mit einer Angel (20) umfassend einen gehäusefesten Abschnitt (22) und einen um die Schwenkachse (12; 13) der Angel (20) schwenkbaren Abschnitt (24), **gekennzeichnet durch** eine lösbare Lagerung des schwenkbaren Abschnitts (24) am gehäusefesten Abschnitt (22).

6. Zubereitungseinrichtung nach einem der Ansprüche 2 bis 4, **gekennzeichnet durch** einen Federhaken (26) und ein bezüglich der Schwenkachse (13) der Angel (20) weitgehend gegenüberliegendes Gegenlager (28) an einem ersten Abschnitt, die einen Angelbolzen (22), der die Schwenkachse (13) definiert und der an einem zweiten Abschnitt angeordnet ist, gemeinsam lösbar umgreifen, wobei der erste Abschnitt den gehäusefesten Abschnitt (22) und der zweite Abschnitt den schwenkbaren Abschnitt (24) bilden kann oder umgekehrt.

7. Zubereitungseinrichtung nach dem obigen Anspruch, **gekennzeichnet durch** einen Betätigungsabschnitt (30) am Federhaken (26) zum Auslenken des Federhakens (26) vom Gegenlager (28) weg.

8. Zubereitungseinrichtung nach dem obigen Anspruch, **gekennzeichnet durch** einen Rastvorsprung (32) am Betätigungsabschnitt (30), der in einem aktivierten Zustand des Federhakens (26) in einer Demontagerichtung D des beweglichen Abschnitts (24) hinter einem Widerlager (34) liegt, von dem er bei Auslenkung des Federhakens (26) freikommt.

## Claims

1. Hot beverage preparation device for household use with a front panel (1) facing a user, with a shelf surface (2) arranged on the front panel (1) for a beverage vessel with an output device (3) arranged above for dispensing a hot beverage into a beverage vessel positioned on the shelf surface (2) and with a button (10) mounted in an articulated manner over a large area and arranged on the front panel (1) between the output device (2) and the shelf surface (3), **characterised by** a pivot axis (12; 13) of the button (10) arranged on an edge, which pivot axis (12; 13) extends at a spacing of up to one centimetre from the edge of the button (10) or which is located outside the button surface.

2. Preparation device according to the above claim with an indentation of the front panel (1), tapering conically downwards, between the output device (3) and the shelf surface (2), **characterised by** a pivot axis (13) of the articulated mounting of the button (10), which is inclined corresponding to the conical indentation.

3. Preparation device according to one of the above claims, **characterised by** a first actuation segment (14) of the button (10) for an actuation by means of a beverage vessel and by a second actuation segment (15) of the button (10) spatially separate from the first actuation segment (14) for an actuation by means of at least one finger, wherein the first actuation segment (14) is located in a largely vertical actuation plane and the second actuation segment (15) is located in a second actuation plane different from the first actuation plane.

4. Preparation device according to one of the above claims, **characterised by** a mounting of the button (10) on at least three hinges (20).

5. Preparation device according to claim 2 or 3, with a hinge (20) comprising a segment (22) fixed to the housing and a segment (24) which can be pivoted about the pivot axis (12; 13) of the hinge (20), **characterised by** a releasable mounting of the pivotable segment (24) on the segment (22) fixed to the housing.

6. Preparation device according to one of claims 2 to 4, **characterised by** a spring hook (26) and a counter-bearing (28) located largely opposite with respect to the pivot axis (13) of the hinge (20) on a first segment, which jointly surround a hinge bolt (22), which defines the pivot axis (13) and is arranged on a second segment, in a releasable manner, wherein the first segment can form the segment (22) fixed to the housing and the second segment can form the pivotable segment (24) or vice versa.

7. Preparation device according to the above claim, **characterised by** an actuation segment (30) on the spring hook (26) for articulating the spring hook (26) away from the counter-bearing (28).

8. Preparation device according to the above claim, **characterised by** a latching projection (32) on the actuation segment (30), which is located behind an abutment (34) in an activated state of the spring hook (26) in a disassembly direction D of the movable segment (24), from which it is released upon articulation of the spring hook (26).

## Revendications

1. Dispositif de préparation de boissons chaudes à usage domestique, comprenant un côté frontal (1) tourné vers un utilisateur, comprenant une surface de pose (2) disposée sur le côté frontal (1) pour un récipient pour boisson, comprenant un dispositif de sortie (3) disposé par-dessus, destiné à sortir une boisson chaude dans un récipient pour boisson positionné sur la surface de pose (2), et comprenant une touche (10) logée de manière articulée sur une grande surface, disposée sur le côté frontal (1) entre le dispositif de sortie (2) et la surface de pose (3), destinée à la mise en service, **caractérisé par** un axe de pivotement (12 ; 13) de la touche (10), disposé côté bord, lequel s'étend avec un écart du bord de la touche (10) allant jusqu'à un centimètre ou se situe en dehors de la surface de la touche.

2. Dispositif de préparation selon la revendication ci-dessus, comprenant une échancrure du côté frontal (1), se rétrécissant de manière conique vers le bas, entre le dispositif de sortie (3) et la surface de pose (2), **caractérisé par** un axe de pivotement (13), incliné de manière correspondant à l'échancrure conique, du logement articulé de la touche (10).

3. Dispositif de préparation selon l'une quelconque des revendications ci-dessus, **caractérisé par** une première section de commande (14) de la touche (10) pour une commande avec un récipient pour boisson et par une deuxième section de commande (15) de la touche (10), séparée spatialement de la première section de commande (14), pour une commande avec au moins un doigt, la première section de commande (14) étant située dans un plan de commande largement vertical et la deuxième section de commande (15) étant située dans un deuxième plan de commande différent du premier plan de commande.

4. Dispositif de préparation selon l'une quelconque des revendications ci-dessus, **caractérisé par** un logement de la touche (10) sur au moins trois gonds (20).

5. Dispositif de préparation selon la revendication 2 ou 3, comprenant un gond (20) comprenant une section (22) solidaire au boîtier et une section (24) pivotante autour de l'axe de pivotement (12 ; 13) du gond (20), **caractérisé par** un logement amovible de la section pivotante (24) sur la section (22) solidaire au boîtier.

6. Dispositif de préparation selon l'une quelconque des revendications 2 à 4, **caractérisé par** un crochet élastique (26) et un contre-palier (28), largement situé à l'opposé par rapport à l'axe de pivotement (13) du gond (20), lesquels entourent ensemble de manière amovible un boulon de gond (22) lequel définit l'axe de pivotement (13) et est disposé sur une deuxième section, la première section pouvant former la section (22) solidaire au boîtier et la deuxième section pouvant former la section pivotante (24) ou vice-versa.

7. Dispositif de préparation selon la revendication ci-dessus, **caractérisé par** une section de commande (30) sur le crochet élastique (26), destinée à dévier le crochet élastique (26) en l'éloignant du contre-palier (28).

8. Dispositif de préparation selon la revendication ci-dessus, **caractérisé par** une saillie d'encliquetage (32) sur la section de commande (30), laquelle saillie d'encliquetage, dans un état activé du crochet élastique (26) dans une direction de démontage D de la section mobile (24), est située derrière une butée (34) de laquelle elle se libère lors de la déviation du crochet élastique (26).
